# EUROPEAN PATENT APPLICATION

(11) **EP 4 576 593 A1**
(43) Date of publication of application: **25.06.2025**
(21) Application number: 23892009.4
(22) Date of filing: 15.11.2023
(51) Int. Cl.: H04B 1/401, H04B 1/04, H04B 1/00

(54) **ELECTRONIC DEVICE FOR PROCESSING RADIO SIGNAL FOR SATELLITE COMMUNICATION AND OPERATION METHOD THEREFOR**

(30) Priority: 15.11.2022 KR 20220152717; 13.01.2023 KR 20230005333
(71) Applicant: Samsung Electronics Co., Ltd., Suwon-si, Gyeonggi-do 16677 (KR)
(72) Inventor: YANG, Dongil, Suwon-si, Gyeonggi-do 16677 (KR); MOON, Yohan, Suwon-si, Gyeonggi-do 16677 (KR); NA, Hyoseok, Suwon-si, Gyeonggi-do 16677 (KR); YOO, Jonghun, Suwon-si, Gyeonggi-do 16677 (KR)
(74) Representative: Gulde & Partner
(86) International application number: PCT/KR2023/018366
(87) International publication number: WO 2024/106943

(57) **Abstract**

According to certain embodiments of the disclosure, a communication circuit of an electronic device, comprises: a plurality of antennas; an antenna switch configured to match a radio frequency (RF) signal of a designated frequency band with at least one antenna of the plurality of antennas; a first amplifier configured to amplify the RF signal in the designated frequency band, thereby resulting in a first amplified signal; a first antenna switch connected to the first amplifier; a first filter configured to allow the first amplified signal in the designated frequency band, the first filter connected to the antenna switch, wherein the first antenna switch is configured to selectively form a first signal path to the antenna switch via the first filter or a second signal path to the antenna switch bypassing the first filter; a second amplifier configured to amplify the radio frequency (RF) signal in the designated frequency band, thereby resulting in a second amplified signal; a second antenna switch connected to the second amplifier; a second filter configured to allow the RF signal in the designated frequency band, the second filter connected to the antenna switch, wherein the second antenna switch is configured to selectively form a third signal path to the antenna switch via the second filter or a fourth signal path to the antenna switch bypassing the first filter; and a processor configured to control the first antenna switch to form the second signal path and the second antenna switch to form the fourth signal path during communication with a satellite.

## Description

### [Technical Field]

An embodiment of the disclosure provides a wireless signal processing method for supporting satellite communication in an electronic device and an electronic device supporting the same.

### [Background Art]

With the development of digital technology, various types of electronic devices such as smartphones, tablet personal computers (PCs), laptop PCs, and/or wearable devices are widely being used. In order to support and increase functions of these electronic devices, hardware parts and/or software parts of electronic devices are continuously being developed.

Recent electronic devices may support communication methods (e.g., dual connectivity or carrier aggregation) utilizing multiple frequency bands (or multi-frequency bands or RF bands). The communication methods using multiple frequency bands may have a larger bandwidth compared to those using a single frequency band. The communication methods utilizing multiple frequency bands with relatively large bandwidth may implement higher data transmission or reception speeds compared to other communication methods.

To support the communication methods utilizing multiple frequency bands, electronic devices may have multiple RF circuits (or chains) capable of processing signals of each frequency band between an antenna and a transceiver.

Electronic devices performing wireless communication may simultaneously utilize multiple frequency bands using multiple RF circuits. The electronic devices may support wireless communication through combinations of multiple frequency bands. For example, the electronic devices may support various bands, such as a first band (e.g., mid-band), a second band (e.g., mid/high-band), a third band (e.g., low band), and/or a fourth band (e.g., ultra-high band), and may include RF circuits for this purpose.

Recently, research and development are being carried out to support satellite communication through connection between an electronic device and a satellite. In general, an output is possible with sufficient transmission power from a satellite, so that an electronic device may receive a satellite signal when operating as a receiving side. However, when the electronic device operates as a transmitting side, the electronic device cannot output transmission power capable of reaching the satellite, and the current transmission terminal (e.g., RFFE or radio frequency front end) structure of the electronic device cannot support satellite communication. Therefore, for satellite communication, the electronic device may need an amplifier (e.g., a power amplifier {PA}) capable of supporting sufficient transmission power to reach the satellite. However, when designing a power amplifier for the electronic device to support satellite communication, there is a problem in that the size of the electronic device and the manufacturing cost of the electronic device may increase due to the design of the amplifier for sufficient transmission power.

### [Disclosure of Invention]

### [Technical Problem]

In an embodiment of the disclosure, an electronic device including a transmission signal processing method for supporting satellite communication in an electronic device, and a transmission terminal (e.g., RFFE or radio frequency front end) structure for supporting the transmission signal processing method are provided.

In an embodiment of the disclosure, a transmission signal processing method capable of achieving transmission power that can reach a satellite without a substantial design change of an existing transmission terminal structure in an electronic device, and an electronic device including a transmission terminal structure for supporting the transmission signal processing method are provided.

In an embodiment of the disclosure, a transmission signal processing method capable of achieving transmission power that can reach a satellite using a combination of multiple RF circuits (or chains) capable of processing signals of a plurality of frequency bands in an electronic device, and an electronic device including a transmission terminal structure for supporting the transmission signal processing method are provided.

The technical objectives to be achieved in this document is not limited to the technical objectives mentioned above, and other technical objectives not mentioned can be clearly understood by those skilled in the art from the description below.

### [Solution to Problem]

A communication circuit of an electronic device according to an embodiment of the disclosure may include a plurality of antennas, an antenna switch configured to match an RF signal of a designated frequency band with at least one antenna, and a transmission circuit configured to process a radio frequency (RF) signal in a designated frequency band. According to an embodiment, the transmission circuit may include a first transmission circuit including a first amplifier configured to amplify the RF signal in the designated frequency band, a first filter configured to allow the RF signal in the designated frequency band to pass therethrough, and a first antenna switch configured to selectively switch a first signal path through which the RF signal is transmitted to the antenna switch while passing through the first filter and a second signal path through which the RF signal is transmitted to the antenna switch without passing through the first filter. According to an embodiment, the transmission circuit may include a second transmission circuit including a second amplifier configured to amplify the RF signal in the designated frequency band, a second filter configured to allow the RF signal in the designated frequency band to pass therethrough, and a second switch configured to selectively switch a third signal path through which the RF signal is transmitted to the antenna switch while passing through the second filter, and a fourth signal path through which the RF signal is transmitted to the antenna switch without passing through the second filter. According to an embodiment, the transmission circuit may control operations of the first switch and the second switch to be connected to the second signal path and the fourth signal path during satellite communication, may amplify the plurality of identical RF signals in the designated frequency band through the first amplifier and the second amplifier, may allow a first signal amplified by the first amplifier to be bypassed to the antenna switch through the second signal path without passing through the first filter, may allow a second signal amplified by the second amplifier to be bypassed to the antenna switch through the fourth signal path without passing through the second filter, and may output the first signal and the second signal together through the plurality of antennas via the antenna switch.

An electronic device according to an embodiment of the disclosure may include a first antenna module configured to transmit a first transmission signal, a second antenna module configured to transmit a second transmission signal, a communication circuit configured to be operatively connected to the first antenna module and the second antenna module and to include a first transmission circuit configured to signal-process the first transmission signal according to a designated frequency band and a second transmission circuit configured to signal-process the second transmission signal according to a designated frequency band, and a processor configured to be operatively connected to the communication circuit. According to an embodiment, the processor may identify a type of communication based on detecting a start of a communication service, may determine a signal path for RF signal transmission to be a first signal path for cellular communication based on determining that the type of communication is cellular communication, may generate a first control signal for establishing the first signal path, may determine the signal path for RF signal transmission to be a second signal path for satellite communication based on determining that the type of communication is satellite communication, and may generate a second control signal for establishing the second signal path.

An operating method of an electronic device according to an embodiment of the disclosure may include identifying the type of communication based on detecting a start of a communication service. The operating method may include determining a signal path for RF signal transmission to be a first signal path for cellular communication based on determining that the type of communication is cellular communication. The operating method may include generating a first control signal for establishing the first signal path. The operating method may include determining the signal path for RF signal transmission to be a second signal path for satellite communication based on determining that the type of communication is satellite communication. The operating method may include generating a second control signal for establishing the second signal path.

In order to solve the above problems, various embodiments of the disclosure may include a computer-readable recording medium in which a program for executing the method in a processor is recorded.

According to an embodiment, a non-transitory computer readable storage medium (or a computer program product) storing one or more programs is described. According to an embodiment, the one or more programs may include instructions, when executed by a processor of an electronic device, that perform operations of identifying the type of communication based on detecting a start of a communication service, determining a signal path for RF signal transmission to be a first signal path for cellular communication based on determining that the type of communication is cellular communication, generating a first control signal for establishing the first signal path, determining the signal path for RF signal transmission to be a second signal path for satellite communication based on determining that the type of communication is satellite communication, and generating a second control signal for establishing the second signal path.

Additional scope of applicability of the disclosure will become apparent from the detailed description that follows. However, since various changes and modifications within the spirit and scope of the disclosure can be clearly understood by those skilled in the art, it should be understood that the detailed description and specific embodiments such as the preferred embodiments of the disclosure are given by way of example only.

### [Advantageous Effects of Invention]

According to an electronic device, an operation method thereof, and a recording medium according to an embodiment of the disclosure, it is possible to support satellite communication without substantially changing the design of an existing transmission terminal structure in the electronic device. According to an embodiment, the electronic device may implement transmission power capable of reaching a satellite by using an existing transmission terminal structure to support satellite communication. According to an embodiment, it is possible to minimize the complexity of the electronic device by maximizing the existing transmission terminal structure without using additional components in the electronic device.

**In** addition to these, various effects identified directly or indirectly through this document may be provided. Effects obtainable in the disclosure are not limited to the effects mentioned above, and other effects not mentioned may be clearly understood by those skilled in the art from the description below.

### [Brief Description of Drawings]

In relation to the drawing description, the same or similar reference numerals may be used for the same or similar elements.
FIG. 1 is a block diagram illustrating an example electronic device in a network environment according to various embodiments.
FIG. 2 illustrates an electronic device 101 for supporting legacy network communication and 5G network communication according to an embodiment.
FIG. 3 is a diagram illustrating an example of a communication system including an electronic device and a satellite according to an embodiment of the disclosure.
FIG. 4 is a diagram schematically illustrating a configuration of an electronic device according to an embodiment of the disclosure.
FIG. 5 is a diagram illustrating an example of a transmission control structure in a transmission terminal of an electronic device according to an embodiment of the disclosure.
FIG. 6 is a diagram schematically illustrating a circuit configuration of a communication circuit related to communication of an electronic device according to an embodiment of the disclosure.
FIG. 7 is a diagram schematically illustrating a circuit configuration of a communication circuit related to communication of an electronic device according to an embodiment of the disclosure.
FIG. 8 is a diagram schematically illustrating a circuit configuration of a communication circuit related to communication of an electronic device according to an embodiment of the disclosure.
FIG. 9 is a flowchart illustrating an operating method of an electronic device according to an embodiment of the present disclosure.

### [Mode for the Invention]

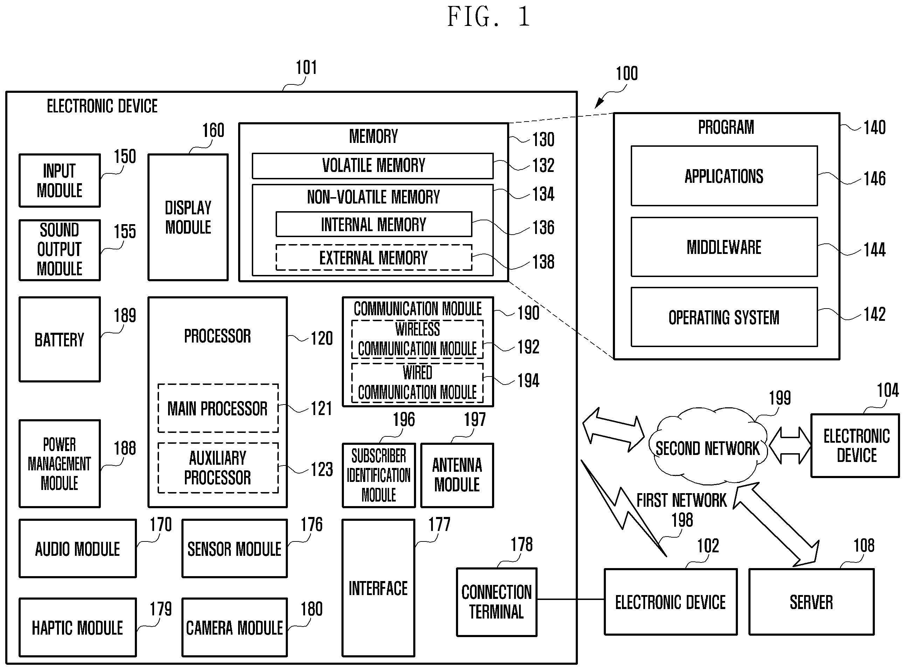

FIG. 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multipleoutput (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or clientserver computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

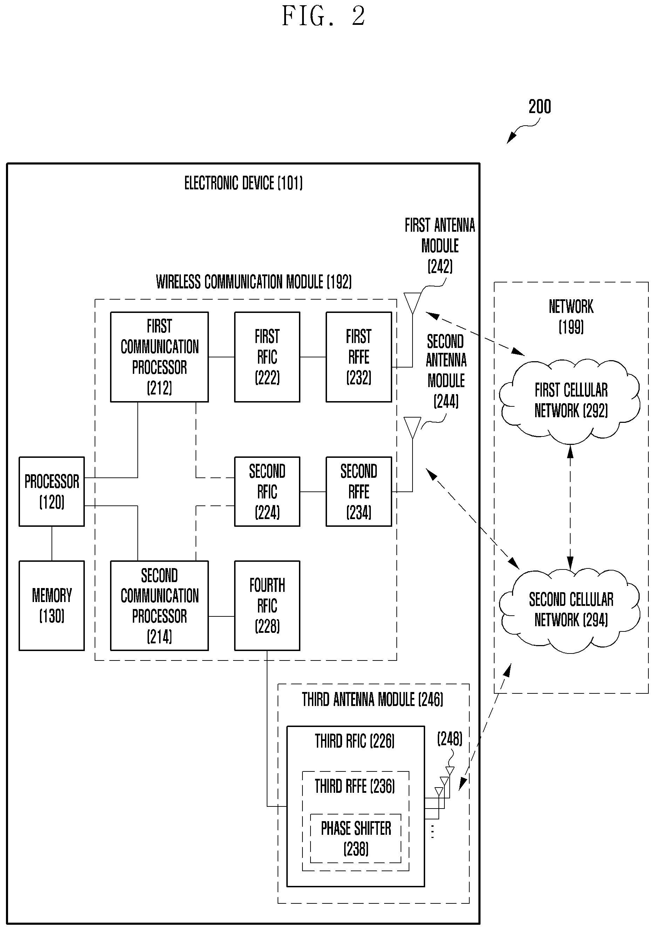

FIG. 2 illustrates an electronic device 101 for supporting legacy network communication and 5G network communication according to an embodiment.

Referring to FIG. 2, the electronic device 101 may further include a first communication processor 212, a second communication processor 214, a first RFIC 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor 120 and a memory 130.

The network 199 may include a first network 292 and a second network 294. The electronic device 101 may further include at least one of the components shown in FIG. 1, and the network 199 may further include at least another network. The first communication processor 212, the second communication processor 214, the first RFIC 222, the second RFIC 224, the fourth RFIC 228, the first RFFE 232, and the second RFFE 234 may constitute at least a part of the wireless communication module 192. The fourth RFIC 228 may be omitted, or may be included as a part of the third RFIC 226.

The first communication processor 212 may establish a communication channel in a band to be used for wireless communication with a first network 292, and may support legacy network communication through the established communication channel. The first network may be a legacy network including a second generation (2G), third generation (3G), fourth generation (4G), or long-term evolution (LTE) network.

The second communication processor 214 may establish a communication channel corresponding to a designated band (e.g. from about 6 GHz to about 60 GHz) among bands to be used for wireless communication with a second network 294, and may support 5G network communication through the established communication channel. The second network 294 may be a 5G network defined in the third generation partnership project (3GPP).

Additionally, the first communication processor 212 or the second communication processor 214 may establish a communication channel corresponding to another designated band (e.g. about 6 GHz or less) among bands to be used for wireless communication with the second network 294, and may support 5G network communication through the established communication channel. The first communication processor 212 and the second communication processor 214 may be implemented in a single chip or a single package together with the processor 120, the auxiliary processor 123, or the communication module 190.

At the time of signal transmission, the first RFIC 222 may convert a baseband signal generated by the first communication processor 212 into a radio-frequency (RF) signal of about 700 megahertz (MHz) to about 3 GHz used for the first network 292 (e.g. a legacy network). At the time of signal reception, the RF signal may be acquired from the first network 292 (e.g. a legacy network) through an antenna (e.g. the first antenna module 242), and may be preprocessed through RFFE (e.g. the first RFFE 232). The first RFIC 222 may convert the preprocessed RF signal into a baseband signal which can be processed by the first communication processor 212.

At the time of signal transmission, the second RFIC 224 may convert a baseband signal generated by the first communication processor 212 or the second communication processor 214 into an RF signal (hereinafter, a 5G Sub6 RF signal) of a Sub6 band (e.g. about 6 GHz or less) used for the second network 294 (e.g. a 5G network). At the time of signal reception, the 5G Sub6 RF signal may be acquired from the second network 294 (e.g. a 5G network) through an antenna (e.g. the second antenna module 244), and may be preprocessed through RFFE (e.g. the second RFFE 234). The second RFIC 224 may convert the preprocessed 5G Sub6 RF signal into a baseband signal which can be processed by a corresponding communication processor among the first communication processor 212 and the second communication processor 214.

The third RFIC 226 may convert a baseband signal generated by the second communication processor 214 into an RF signal (hereinafter, a 5G Above6 RF signal) of a 5G Above6 band (e.g. from about 6 GHz to about 60 GHz) to be used in the second network 294 (e.g. a 5G network). At the time of signal reception, the 5G Above6 RF signal may be acquired from the second network 294 (e.g. a 5G network) through an antenna (e.g. the antenna 248), and may be preprocessed through the third RFFE 236. The third RFIC 226 may convert the preprocessed 5G Above6 RF signal into a baseband signal that can be processed by the second communication processor 214. The third RFFE 236 may be configured as a part of the third RFIC 226.

The electronic device 101 may include the fourth RFIC 228 separately from the third RFIC 226 or as at least a part thereof. In this instance, the fourth RFIC 228 may convert a baseband signal generated by the second communication processor 214 into an RF signal (hereinafter, an intermediate-frequency (IF) signal) of an intermediate frequency band (e.g. from about 9 GHz to about 11 GHz) and may then transmit the IF signal to the third RFIC 226. The third RFIC 226 may convert the IF signal into a 5G Above6 RF signal. At the time of signal reception, the 5G Above6 RF signal may be received from the second network 294 (e.g. a 5G network) through an antenna (e.g. the antenna 248) and may be converted into an IF signal by the third RFIC 226. The fourth RFIC 228 may convert the IF signal into a baseband signal that can be processed by the second communication processor 214.

The first RFIC 222 and second RFIC 224 may be implemented as at least a part of a single package or a single chip. The first RFFE 232 and the second RFFE 234 may be implemented as at least a part of a single package or a single chip. At least one antenna module of the first antenna module 242 or the second antenna module 244 may be omitted, or may be combined with the other antenna module to process RF signals of multiple bands corresponding thereto.

The third RFIC 226 and antenna 248 may be arranged on the same substrate to constitute a third antenna module 246. For example, the wireless communication module 192 or the processor 120 may be arranged on a first substrate (e.g. a main PCB). In this instance, the third antenna module 246 may be configured by arranging the third RFIC 226 in a partial area (e.g. a lower surface) of a second substrate (e.g. a sub PCB) independent of the first substrate and arranging the antenna 248 in another partial area (e.g. an upper surface) thereof. Arranging the third RFIC 226 and the antenna 248 on the same substrate can reduce the length of a transmission line therebetween, and may reduce the loss (e.g. attenuation) of a signal in a high-frequency band (e.g. about 6GH - about 60 GHz), used for 5G network communication, by a transmission line. Therefore, the electronic device 101 may exhibit an enhanced quality or speed of communication with the second network 294 (e.g. a 5G network).

The antenna 248 may be configured as an antenna array including multiple antenna elements which can be used for beamforming. In this instance, the third RFIC 226 may include, as a part of the third RFFE 236, multiple phase shifters 238 corresponding to the multiple antenna elements. At the time of signal transmission, the multiple phase shifters 238 may shift the phases of 5G Above6 RF signals to be transmitted from the electronic device 101 to an external device (e.g. a base station of a 5G network) through antenna elements corresponding thereto. At the time of signal reception, the multiple phase shifters 238 may shift the phases of 5G Above6 RF signals received from the outside through antenna elements corresponding thereto into an identical or substantially identical phase, thus enabling the transmission or reception through beamforming between the electronic device 101 and the outside.

The second network 294 (e.g. a 5G network) may be operated independently of the first network 292 (e.g. a legacy network) (e.g. stand-alone (SA)) or may be operated while being connected to the first network (e.g. non-standalone (NSA)). For example, the 5G network may include only an access network (e.g. a 5G radio access network (RAN) or next-generation RAN (NG RAN)) and may not include a core network (e.g. a next-generation core (NGC)). In this instance, the electronic device 101 may access an access network of a 5G network and may then access an external network (e.g. Internet) under the control of a core network (e.g. an evolved packed core (EPC) network) of a legacy network. Protocol information (e.g. LTE protocol information) for communication with the legacy network or protocol information (e.g. new radio (NR) protocol information) for communication with the 5G network are stored in a memory 230, and may be accessed by another component (e.g. the processor 120, the first communication processor 212, or the second communication processor 214).

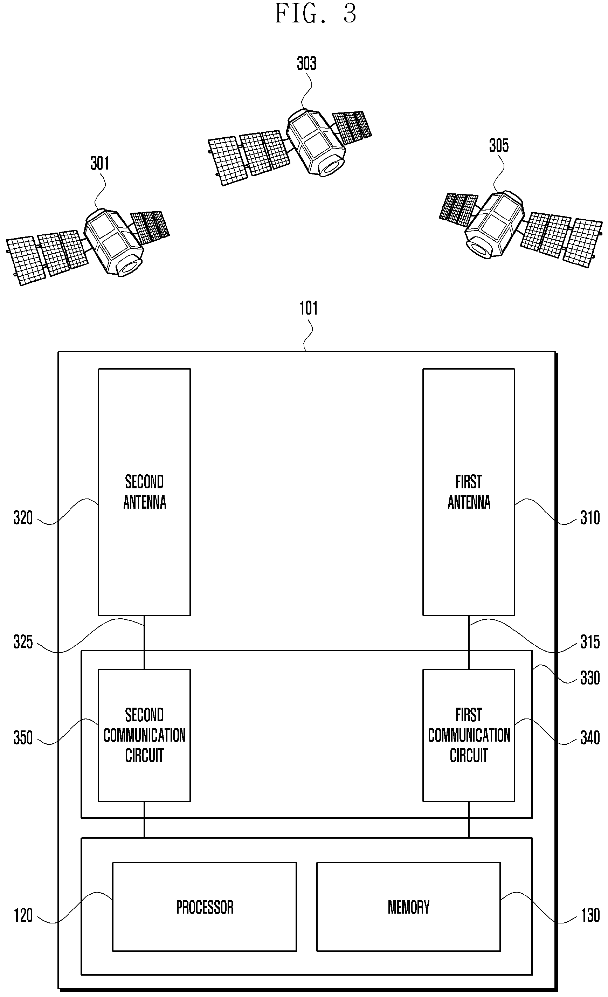

FIG. 3 is a diagram illustrating an example of a communication system including an electronic device and a satellite according to an embodiment of the disclosure.

As illustrated in FIG. 3, a system according to an embodiment may include at least one satellite 301, 303, and 305 and an electronic device 101. According to an embodiment, the electronic device 101 may be configured to transmit and receive wireless signals to and from at least one satellite 301, 303, and 305. According to an embodiment, the electronic device 101 may be a device capable of performing satellite communication. In an embodiment, the electronic device 101 may be a portable device such as a cellular phone, a smartphone, a tablet PC, and/or a laptop computer, but is not limited thereto and may include various other components not described in this disclosure.

According to an embodiment, the electronic device 101 may transmit a radio signal to the at least one satellite 301, 303, and 305. According to an embodiment, the radio signal transmitted by the electronic device 101 may be transmitted to a base station (not shown). According to an embodiment, the electronic device 101 may receive a radio signal from the at least one satellite 301, 303, or 305. According to an embodiment, the radio signal received from the at least one of the satellites 301, 303, and 305 may also be received by a base station (not shown). According to an embodiment, the electronic device 101 may transmit and receive radio signals using multiple frequency bands (e.g., a first band, a second band, and/or a third band).

According to an embodiment, the electronic device 101 may include a satellite communication function and a wireless communication function. According to an embodiment, the electronic device 101 may include a communication circuit (or an RF circuit or an RF chain) (e.g., a first communication circuit 340 or a second communication circuit 350) including antennas (e.g., a first antenna 310 and a second antenna 320) capable of transmitting and receiving a plurality of signals and at least one circuit capable of processing signals corresponding to the antennas 310 and 320. According to an embodiment, the electronic device 101 may include a first communication circuit 340 and a second communication circuit 350 capable of processing radio signals (e.g., transmission signals) for supporting satellite communication. According to an embodiment, the radio signals may be transmitted or received by at least two or more different frequency bands of the same satellite. For example, the electronic device 101 may transmit the same signal for satellite communication with the at least one satellite 301, 303, and 305, to the satellites 301, 303, and 305 at the same time using different frequency bands.

Referring to FIG. 3, the electronic device 101 according to an embodiment may include a first antenna 310, a second antenna 320, a communication circuit 330, a memory 130 (e.g., the memory 130 of FIG. 1), and a processor 120 (e.g., the processor 120 of FIG. 1). In an embodiment, the processor 120 and the memory 130 may be included as elements of the communication circuit 330.

According to an embodiment, the electronic device 101 may include a plurality of antennas (e.g., a first antenna 310 and a second antenna 320), and the antennas 310 and 320 may be implemented as antennas capable of transmitting and receiving one or more signals. According to an embodiment, the antennas 310 and 320 may be configured to support multiple frequency bands such as a first signal of a first band (e.g., mid-band {MB} of about 1 GHz to about 2.3 GHz), a second signal of a second band (e.g., high band {HB} of about 2.3 GHz to about 3 GHz), a third band (e.g., ultra-high band {UHB} from about 3 GHz to about 5 GHz), and/or a fourth band (e.g., low band {LB} from about 300 MHz to about 1 GHz). According to an embodiment, although not shown, each of the first antenna 310 and the second antenna 320 may include a plurality of antennas, and may also include an antenna (e.g., a satellite antenna) for processing signals (e.g., RF signals) related to satellite communication with the at least one satellite 301, 303, and 305.

According to an embodiment, the electronic device 101 may include a communication circuit 330 for processing a plurality of signals transmitted through the antennas 310 and 320. According to an embodiment, the communication circuit 330 may be coupled to a first signal path (or a first connection path) 315 associated with the first antenna 310 and a second signal path (or a second connection path) 325 associated with the second antenna 320. According to an embodiment, the communication circuit 330 may include a plurality of communication circuits (e.g., a first communication circuit 340 and a second communication circuit 350) for processing signals corresponding to the respective antennas 310 and 320. According to an embodiment, the communication circuit 330 may include the first communication circuit 340 for processing a first signal associated with the first antenna 310 and the second communication circuit 350 for processing a second signal associated with the second antenna 320.

According to an embodiment, the first signal of the first communication circuit 340 may be transmitted to the first antenna 310 through the first signal path 315, and may be transmitted to the satellites 301, 303, and 305 through the first antenna 310. According to an embodiment, the second signal of the second communication circuit 350 may be transmitted to the second antenna 320 through the second signal path 325, and may be transmitted to the satellites 301, 303, and 305 through the second antenna 320. According to an embodiment, the first signal of the first communication circuit 340 and the second signal of the second communication circuit 350 may be transmitted to the first antenna 310 or the second antenna 320 of the first communication path 315 or the second communication path 325, and may be transmitted to the satellites 301, 303, and 305 through the first antenna 310 or the second antenna 320.

According to an embodiment, the communication circuit 330 (e.g., the first communication circuit 340 and the second communication circuit 350) may include a transmission circuit (or an RF circuit or an RF chain) (e.g., radio frequency front end {RFFE}) for processing a transmission signal in a designated frequency band for the purpose of satellite communication with the at least one satellite 301, 303, and 305. A structure of the transmission circuit according to an embodiment will be described with reference to drawings to be described later. In an embodiment, the first communication circuit 340 and the second communication circuit 350 are shown and described separately (or divided), but are not limited thereto. For example, the first communication circuit 340 and the second communication circuit 350 may be integrated into one communication circuit, as shown in the communication circuit 330, and may be implemented to process at least two communication circuits based on one communication circuit.

According to an embodiment, the processor 120 may perform an operation related to configuring (e.g., switching) a signal path (or a connection path) of the communication circuit 300 for processing a radio signal (e.g., a transmission signal) for satellite communication with the at least one satellite 301, 303, and 305. According to an embodiment, the processor 120 may perform an operation related to configuring (e.g., switching) a signal path to allow the radio signals of the communication circuits 340 and 350 to be bypassed to the antennas 310 and 320 without passing through a filter in a designated communication circuit while satellite communication is performed.

According to an embodiment, the processor 120 may identify (or monitor) the performance of the antennas 310 and 320 while the electronic device 101 is performing satellite communication. According to an embodiment, the processor 120 may control the signal path to use the second antenna 320 for satellite communication when detecting performance deterioration (or performance degradation) of the first antenna 310. According to an embodiment, when the performance degradation of the second antenna 320 is detected, the processor 120 may control the signal path to use the first antenna 310 for satellite communication.

According to an embodiment, the processor 120 may process signals from the communication circuits 340 and 350 in a single path (or single link) or multiple paths (or multiple links).

According to an embodiment, the processor 120 may receive radio signals from the at least one satellite 301, 303, and 305 through the first antenna 310 and/or the second antenna 320, and may process the received signal.

An operation of configuring, by the processor 120, the signal path to allow the radio signal for satellite communication to reach the satellites 301, 303, and 305 will be described with reference to the following drawings.

According to an embodiment, the memory 130 may store various types of data used by at least one component (e.g., the processor 120 and/or the communication circuit 330) of the electronic device 101. The data may include, for example, input data or output data for applications and commands related thereto. According to an embodiment, the memory 130 may store instructions that, when executed, cause the processor 120 to operate. For example, the application may be stored as software (e.g., the program 140 of FIG. 1) on the memory 130 and may be executable by the processor 120.

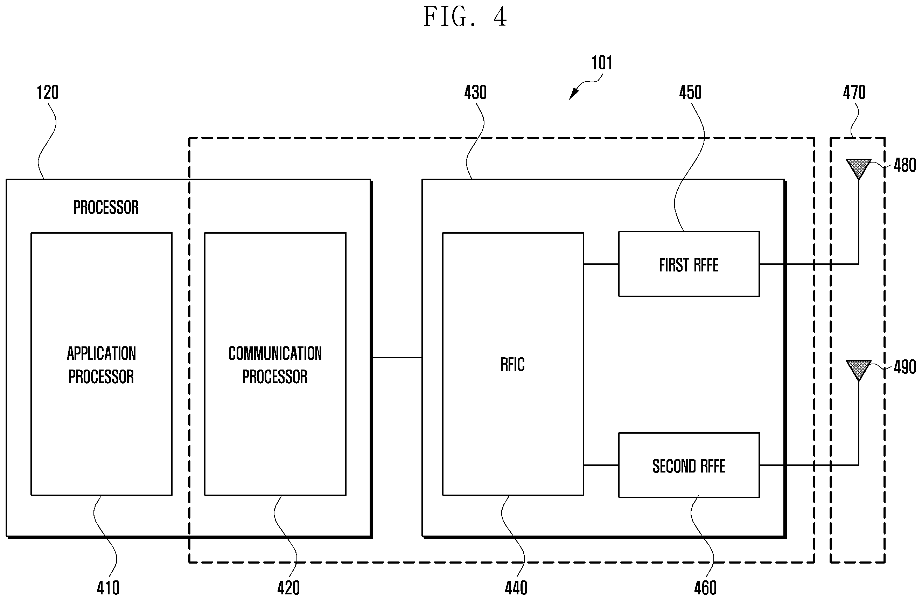

FIG. 4 is a diagram schematically illustrating a configuration of an electronic device according to an embodiment of the disclosure.

According to an embodiment, in FIG. 4, a schematic example of the configuration of the electronic device 101 used to process a radio signal (or an RF signal) (e.g., a transmission signal) to be transmitted from the electronic device 101 to a satellite may be shown.

Referring to FIG. 4, the electronic device 101 according to an embodiment of the disclosure may include a processor 120, a communication circuit 430 (or a communication module), and an antenna 470 (or an antenna module). According to an embodiment, the electronic device 101 may include all or at least some of the components of the electronic device 101 as described in the description with reference to FIGS. 1 to 3. In the following description, prefixes indicating the order such as "first", "second", and "third" are only for distinguishing components having the same name, and the prefixes themselves may not have a special meaning.

According to an embodiment, the antenna 470 may include a plurality of antennas 480 and 490. According to an embodiment, the first antenna 480 and the second antenna 490 may be connected to the communication circuit 430 to transmit and receive an RF signal in a designated frequency band so that the first antenna 480 and the second antenna 490 can be used for first wireless communication (e.g., cellular communication). According to an embodiment, the first antenna 480 and the second antenna 490 may be connected to the communication circuit 430 to transmit and receive an RF signal in a designated frequency band so that the first antenna 480 and the second antenna 490 can be used for second wireless communication (e.g., satellite communication).

According to an embodiment, the communication circuit 430 may include an RFIC 440, a first RFFE 450, a second RFFE 460, and/or a communication processor (CP) 420.

In an embodiment, the first RFFE 450 and the second RFFE 460 may be configured to preprocess (e.g., signal amplification) RF signals in a designated frequency band to be used for the first wireless communication or the second wireless communication. According to an embodiment, the first RFFE 450 and/or the second RFFE 460 may be configured to preprocess an RF signal in a first frequency band designated to be used for the first wireless communication. According to an embodiment, the first RFFE 450 and/or the second RFFE 460 may be configured to preprocess an RF signal in a second frequency band designated to be used for the second wireless communication. In an embodiment, the first RFFE 450 and/or the second RFFE 460 may include a duplexer, an amplifier (power amplifier {PA}), a switch, and/or a filter (e.g., a band pass filter {BPF}). According to an embodiment, the configuration and operation of the RFFE for supporting satellite communication will be described with reference to drawings to be described later.

In an embodiment, upon transmitting an RF signal, the RFIC 440 may convert a baseband signal (or a data signal) received from an application processor (AP) 410 into an RF signal, and may output the RF signal to the first RFFE 450 and/or the second RFFE 460. In an embodiment, upon receiving an RF signal, the RFIC 440 may convert the RF signal received from the first RFFE 450 and/or the second RFFE 460 into a baseband signal (or a data signal) to output the baseband signal to the AP 410.

According to an embodiment, the processor 120 (e.g., the AP 410 or the CP 420) may transmit a control signal used to establish (or switch) a signal path of the RF signal to be output to the antenna 470 (e.g., the first antenna 480 and/or the second antenna 490), to the communication circuit 430 according to the first wireless communication or the second wireless communication. In an embodiment, the configuration of the signal path based on the control signal will be described with reference to the drawings described below.

According to an embodiment, the processor 120 may perform an application layer processing function requested by a user of the electronic device 101. According to an embodiment, the processor 120 may provide functional control and commands for various blocks of the electronic device 101. According to an embodiment, the processor 120 may perform operations or data processing related to control and/or communication of each component of the electronic device 101. For example, the processor 120 may include at least some of the components and/or functions of the processor 120 of FIG. 1. The processor 120 may be operatively connected to, for example, the components of the electronic device 101. The processor 120 may load commands or data received from other components of the electronic device 101 into the memory 130, process the commands or data stored in the memory 130, and store resultant data.

According to an embodiment, the processor 120 may include the AP 410 and/or the CP 420. According to an embodiment, the CP 420 may be included in the communication circuit 430.

According to an embodiment, the processor 120 may be the AP 410. According to an embodiment, the processor 120 may be a system semiconductor responsible for the operation, multimedia driving function, and/or communication function of the electronic device 101. According to an embodiment, the processor 120 may be configured in the form of a system-on-chip (SoC), and may include a technology-intensive semiconductor chip in which several semiconductor technologies are integrated into one and system blocks are implemented as a single chip. According to an embodiment, the system blocks of the processor 120 may include a graphics processing unit (GPU), an image signal processor (ISP), a central processing unit (CPU), a neural processing unit (NPU), a digital signal processor, a modem, and a connectivity and/or security block.

According to an embodiment, the modem may serve to enable the electronic device 101 to use various communication functions. For example, the modem may support communication such as telephone and data transmission/reception while exchanging signals with a base station or a satellite. According to an embodiment, the modem may include an integrated modem (e.g., a cellular modem, an LTE modem, a 5G modem, a 5G-Advanced modem, and a 6G modem) supporting communication technologies such as LTE and 2G to 5G. According to an embodiment, the modem may include an artificial intelligence modem to which an artificial intelligence algorithm is applied.

According to an embodiment of the disclosure, the processor 120 may include processing circuitry and/or executable program elements. According to an embodiment, the processor 120 may control (or process) an operation related to supporting signal processing of a transmission signal (e.g., Tx RF signal) according to cellular communication and satellite communication, based on the processing circuitry and/or the executable program elements. According to an embodiment, the processor 120 may control (or process), when transmitting a transmission signal (e.g., Tx RF signal) for satellite communication, an operation related to configuring (or switching) a signal path through which the transmission signal is bypassed to an antenna terminal without passing through a filter so that the transmission signal can be transmitted with a designated maximum output power.

According to an embodiment, the processor 120 may identify a type of communication based on detecting a start of a communication service. According to an embodiment, the processor 120 may determine whether the type of communication is first wireless communication (e.g., cellular communication) or second wireless communication (e.g., satellite communication). According to an embodiment, the processor 120 may determine a signal path for RF signal transmission to be a first signal path for the first wireless communication based on determining that the type of communication is the first wireless communication, and may generate a first control signal for establishing the first signal path. According to an embodiment, the processor 120 may determine the signal path for RF signal transmission to be a second signal path for the second wireless communication based on determining that the type of communication is the second wireless communication, and may generate a second control signal for establishing the second signal path.

According to an embodiment, a detailed operation of the processor 120 of the electronic device 101 will be described with reference to drawings to be described later.

According to an embodiment, operations performed by the processor 120 may be implemented as a recording medium (or a computer program product). For example, the recording medium may include a non-transitory computer-readable recording medium in which a program for executing various operations performed by the processor 120 is recorded.

The embodiments described in this disclosure may be implemented in a recording medium readable by a computer or a similar device using software, hardware, or a combination thereof. According to hardware implementation, operations described in one embodiment may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and/or electrical units for performing other functions.

In an embodiment, a recording medium (or a computer program product) may include a computer-readable recording medium recording a program for performing operations of: detecting a start of a communication service; identifying a type of communication based on the detecting of the start of the communication service; determining whether the type of communication is first wireless communication (e.g., cellular communication) or second wireless communication (e.g., satellite communication); determining a signal path for RF signal transmission to be a first signal path for the first wireless communication based on determining that the type of communication is the first wireless communication; generating a first control signal for establishing the first signal path; determining the signal path for RF signal transmission to be a second signal path for the second wireless communication based on determining that the type of communication is the second wireless communication; and generating a second control signal for establishing the second signal path.

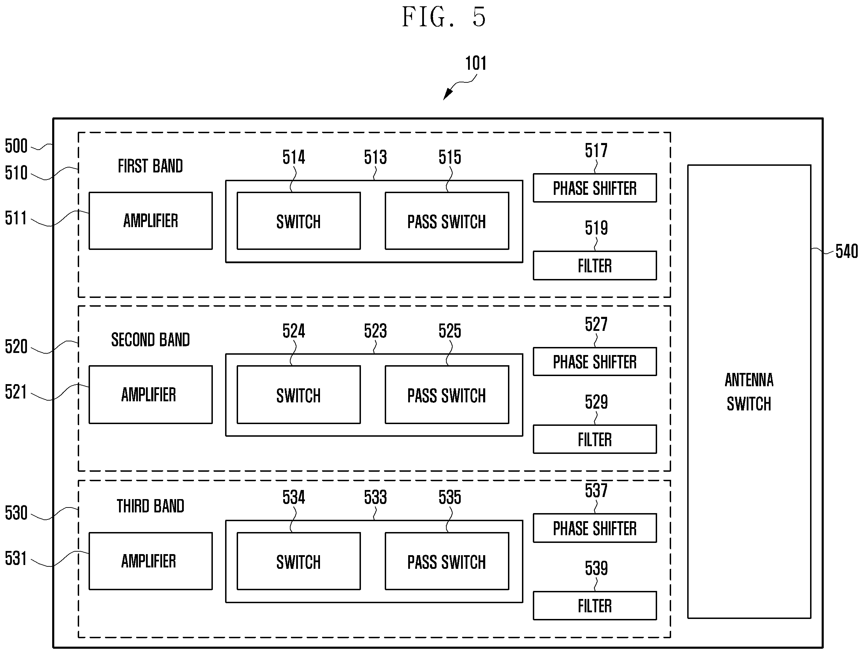

FIG. 5 is a diagram illustrating an example of a transmission control structure in a transmission terminal of an electronic device according to an embodiment of the disclosure.

According to an embodiment, FIG. 5 is a diagram schematically illustrating an example of configuring a transmission circuit for satellite communication of RFFE (e.g., the first RFFE 450 and/or the second RFFE 460 of FIG. 4) in a communication circuit (e.g., the transmission circuit 430 of FIG. 4) of the electronic device 101 according to an embodiment. In describing FIG. 5 below, contents overlapping the contents described with reference to FIGS. 3 and 4 may be omitted or briefly described.

Referring to FIG. 5, in the electronic device 101 according to an embodiment, a transmission circuit 500 (or a transmission terminal) of a communication circuit (e.g., RFFE) (e.g., the first RFFE 450 and/or the second RFFE 460 of FIG. 4) may include a first transmission circuit 510 (or a first RF circuit), a second transmission circuit 520, and a third transmission circuit 530, and an antenna switch 540. The first transmission circuit 510 is configured to process an RF signal (e.g., Tx signal) in a first band. The second transmission circuit 520 (or a second RF circuit) is configured to process an RF signal in a second band. The third transmission circuit 530 (or a third RF circuit) is configured to process an RF signal in a third band. According to an embodiment, the transmission circuit 500 may include amplifiers 511, 521, and 531, control circuits 513, 523, and 533, phase shifters 517, 527, and 537, and filters 519, 529, and 539. The amplifiers 511, 521, and 531 amplify signals. The control circuits 513, 523, and 533 are configured to establish a signal path (or connection path) for an RF signal to support satellite communication. The phase shifters 517, 527, and 537 shift the phase of an RF signal for satellite communication. In certain embodiment, the phase shifters 517, 527, and 537 can shift phases pursuant to a phase modulation (PM) or phase shift keying modulation (PSK) scheme. The filters 519, 529, and 539 are configured to output an RF signal in a designated transmission frequency band.

According to an embodiment, the control circuits 513, 523, and 533 and the phase shifters 517, 527, and 537 may be included in at least one transmission circuit corresponding to a designated frequency band (e.g., a first band, a second band, and/or a third band) for satellite communication. For example, FIG. 5 is for description, and the transmission circuit operating in a frequency band that is not designated for satellite communication may not include a control circuit and a phase shifter.

According to an embodiment, it may be assumed that the electronic device 101 supports multiple frequency bands of a first band (e.g., a mid-band {MB} of about 1 GHz to about 2.3 GHz {e.g., 2G mid-band}), a second band (e.g., a high band {HB} about 2.3 GHz to 3 GHz {e.g., 5G mid-band}), and a third band (e.g., ultra-high band {UHB} of about 3 GHz to 5 GHz). According to an embodiment, it may be assumed that a frequency band used for satellite communication is a mid-band (MB) of about 1 GHz to about 2.3 GHz. In this case, in the transmission circuit 500, the control circuits 513 and 523 and the phase shifters 517 and 527 may be included in the first transmission circuit 510 of the first band and the second transmission circuit 520 of the second band which support the mid-band, that is, a frequency band used for satellite communication, and the third transmission circuit 530 of the third band may not include the control circuit 533 and the phase shifter 537.

According to an embodiment, the transmission circuit 500 of the electronic device 101 may use at least one transmission circuit (e.g., the first transmission circuit 510 and the second transmission circuit 520) supporting a frequency band that can be used for satellite communication with the satellite to output transmission power reachable to the satellite. For example, the electronic device 101 may establish the signal paths of the first transmission circuit 510 and the second transmission circuit 520 through which RF signals are bypassed to the antenna terminal during satellite communication, whereby the RF signal may be transmitted to the satellite by pre-processing (e.g., signal amplification) of the RF signal.

According to an embodiment, in order to transmit an RF signal (e.g., Tx signal) according to satellite communication from the electronic device 101 to the satellite, it is necessary to secure sufficient transmission power for the RF signal to reach the satellite. According to an embodiment of the disclosure, during satellite communication, the electronic device 101 may secure transmission power by allowing the corresponding signals to be bypassed, through the signal path of the transmission circuit (e.g., the first transmission circuit 510 and the second transmission circuit 520) for processing signals in a frequency band designated for satellite communication, to the antenna terminal without transmitting the corresponding signals to a filter (e.g., the filter 519 and the filter 529). For example, the transmission signal for satellite communication is required to reach the satellite. According to an embodiment of the present disclosure, the transmission signal may be output with the maximum output of the power amplifier so that the transmission signal can reach the satellite. According to an embodiment of the disclosure, the transmission signal may be required to be output with the maximum output of the power amplifier so that the transmission signal can reach the satellite. For example, the same transmission signal may be amplified by a plurality of power amplifiers, and the transmission power may be secured by allowing the amplified transmission signal to be bypassed to an antenna module while omitting a filter stage.

According to an embodiment, the electronic device 101 may amplify RF signals of the same frequency through a plurality of amplifiers 511, 521, and 531, and may simultaneously (or together) transmit the transmission signals amplified through the plurality of amplifiers 511, 521, and 531 through a plurality of antennas. According to an embodiment, the RF signals of the same frequency may be amplified by the plurality of amplifiers 511, 521, and 531, may be bypassed through the antenna switch 540, and may be simultaneously (or together) transmitted to the corresponding plurality of antennas, thereby securing higher output transmission power compared to a case in which the RF signals are transmitted (or radiated) through the plurality of antennas. To this end, the phase shifters 517, 527, and 537 may adjust the phases of a plurality of signal paths so that the signals transmitted to the plurality of antennas can be combined effectively without canceling each other out.

In an example, the electronic device 101 can use multiple frequency bands for communication with a satellite. The multiple frequency bands can include a first frequency band and a second frequency band. According to an embodiment, in the structure of the transmission circuit 500 (e.g., RFFE) as illustrated in FIG. 5, assuming the use of the first transmission circuit 510 in the first band and the second transmission circuit 520 in the second band for satellite communication, the electronic device 101 may secure amplifiers (e.g., 511 and 521) of the transmission circuits 510 and 520 supporting at least two mid-bands as power amplifiers used for satellite communication.

According to an embodiment, the electronic device 101 may transmit the same RF signal at the same time for satellite communication, may adjust the phase of the RF signal, and may transmit the RF signal to an antenna (e.g., the antenna switch 540), thereby outputting the RF signal with higher transmission power. For example, the electronic device 101 may implement transmission power capable of reaching a satellite without mounting a dedicated power amplifier for satellite communication. A transmission control structure configured such that the electronic device 101 according to an embodiment of the disclosure may secure transmission power for satellite communication will be described with reference to drawings to be described later.

According to an embodiment, the electronic device 101 may include a switch (e.g., pass switches 515 and 525) capable of changing a signal path in addition to existing switches (e.g., band selection switches 514 and 524) at the output terminal of the power amplifier (e.g., the amplifiers 511 and 521) supporting the frequency band (e.g., the mid-band) used for satellite communication with a satellite, and the phase shifters 517 and 527 capable of converting the phase of the RF signal. For example, the electronic device 101 may perform switching to a signal path that does not pass through the filters 519 and 529 when supporting satellite communication, and may perform switching to a signal path that passes through the filters 519 and 529 when supporting cellular communication.

According to an embodiment, the amplifiers 511, 521, and 531 may be arranged on a path connecting the RFIC (e.g., the RFIC 440 of FIG. 4) and the filters 519, 529 and 539 or the phase shifters 517, 527 and 537. According to an embodiment, the amplifiers 511, 521, and 531 may receive the RF signal from the RFIC 440, may amplify the received RF signal, and may output the amplified RF signal to the antenna switch 540 through the filters 519, 529, and 539. According to an embodiment, the amplifiers 511, 521, and 531 may amplify the RF signals of the same frequency to allow the amplified RF signals to be bypassed to the antenna switch 540, thereby simultaneously (or together) transmitting the RF signals to the corresponding plurality of antennas through the antenna switch 540. For example, the RF signals of the same frequency may be amplified through the plurality of amplifiers 511, 521, and 531, and the amplified transmission signal may be simultaneously (or together) transmitted (radiated) through the plurality of antennas, thereby securing transmission power of higher power.

According to an embodiment, the switches (e.g., the pass switches 515 and 525) may be arranged on the path connecting the output terminal of the amplifiers 511, 521, and 531 and the filters 519, 529, and 539 or the phase shifters 517, 527, and 537. According to an embodiment, the switches (e.g., the pass switches 515 and 525) may switch a signal path for switching between satellite communication and cellular communication. According to an embodiment, the switches (e.g., the pass switches 515 and 525) may be switched according to a control signal (e.g., a first control signal or a second control signal) of the processor 120. According to an embodiment, the switches (e.g., the pass switches 515 and 525) can be omitted, and the role of the switches (e.g., the pass switch (515 and 525) can be replaced by utilizing a designated port (e.g., GPIO) of the existing switches (e.g., the band selection switches 514 and 524).

According to an embodiment, the phase shifters 517, 527, and 537 may be arranged between the output terminals of the switches (e.g., the pass switches 515 and 525) and the antenna switch 540. According to an embodiment, the phase shifters 517, 527, and 537 may adjust the phase of the transmission power in each signal path. According to an embodiment, the phase shifters 517, 527, and 537 may adjust the phases of a plurality of signal paths so that RF signals transmitted to the plurality of antennas can be combined effectively without canceling each other out. For example, when a plurality of identical RF signals are transmitted to the antenna through each signal path, the phase shifters 517, 527, and 537 may serve to change the phase so that the plurality of identical RF signals can be combined effectively to generate high transmission power.

According to an embodiment, the filters 519, 529, and 539 may be configured to filter the RF signal having a designated frequency band to output the RF signal to the antenna switch 540.

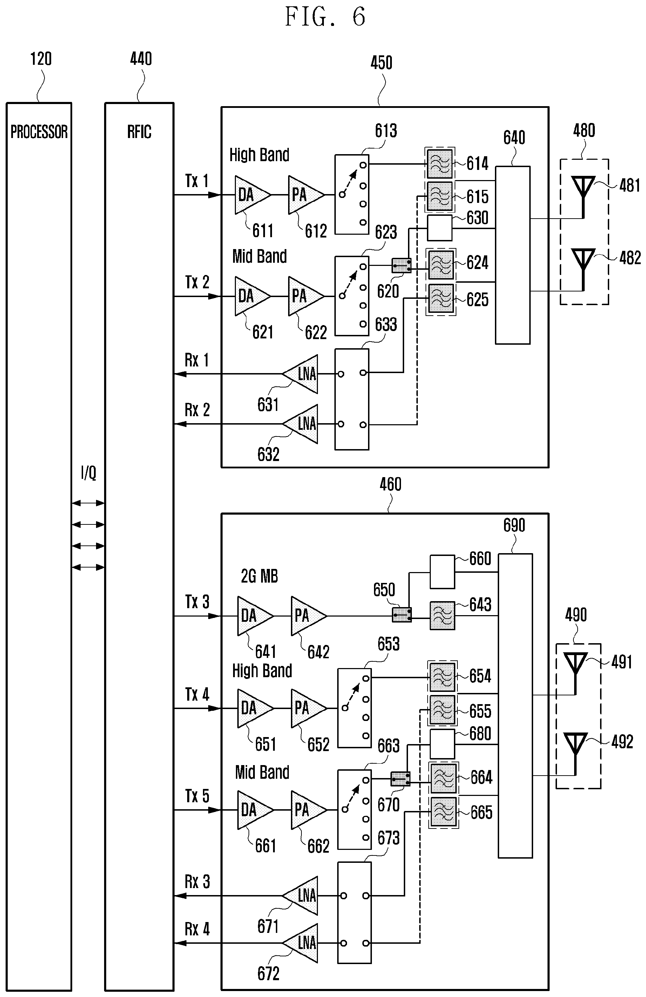

According to an embodiment, FIGS. 6 to 8 below may illustrate examples of a transmission control structure configured such that the electronic device 101 may secure transmission power for satellite communication. Hereinafter, in the description of FIGS. 6 to 8, it is assumed that the electronic device 101 supports multiple frequency bands of a first band (e.g., a mid-band of about 1 GHz to about 2.3 GHz {e.g., a 2G mid-band}), a second band (e.g., a high band of about 2.3 GHz to 3 GHz {e.g., a 5G mid-band}), and a third band (e.g., an ultra-high band of about 3 GHz to 5 GHz). According to an embodiment, it may be assumed that a frequency band used for satellite communication is a mid-band of about 1 GHz to about 2.3 GHz. Accordingly, in the examples of FIGS. 6 to 8, examples of a structure in which the control circuit and the phase shifter are designed at output terminals of at least three PAs supporting a mid-band are described.

According to an embodiment, the electronic device 101 may operate to select a signal path through which the RF signal is bypassed to the antenna terminal without passing through the filter of the transmission circuit when supporting satellite communication, and may operate to select a signal path through which the RF signal passes through the filter of the transmission circuit and is transmitted to the antenna terminal when supporting cellular communication.

FIG. 6 is a diagram schematically illustrating a circuit configuration of a communication circuit related to communication of an electronic device according to an embodiment of the disclosure.

Referring to FIG. 6, an electronic device 101 (e.g., the electronic device 101 of FIG. 1) according to an embodiment may include a processor 120 (e.g., the processor 120 of FIG. 1 or 4), an RFIC 440 (e.g., the RFIC 440 of FIG. 4), a first communication circuit 450 (e.g., the first RFFE 450 of FIG. 4), a second communication circuit 460 (e.g., the second RFFE 460 of FIG. 4), a first antenna module 480 (e.g., the first antenna 480 of FIG. 4), and a second antenna module 490 (e.g., the second antenna 490 of FIG. 4). According to an embodiment, the first communication circuit 450 and the second communication circuit 460 may be provided (or implemented) as one integrated circuit or chip (e.g., a single chip).

According to an embodiment, the processor 120 may generate a baseband signal and may transmit the generated baseband signal to the RFIC 440. According to an embodiment, the baseband signal may be converted into an RF signal (e.g., a transmission signal) through the RFIC 440 and may be input to an amplifier of a corresponding transmission circuit. According to an embodiment, the processor 120 may transmit a control signal for establishing (e.g., switching) a signal path for a designated transmission circuit in a communication circuit (e.g., the first communication circuit 450 and the second communication circuit 460) to the communication circuits 450 and 460 through a designated port (not shown), based on the type of communication (e.g., cellular communication or satellite communication) performed by the electronic device 101.

For example, during cellular communication, the processor 120 may generate a first control signal for controlling switching so that a transmission signal passes through a filter and is transmitted to the antenna modules 480 and 490. For example, during satellite communication, the processor 120 may generate a second control signal for controlling switching so that the transmission signal is bypassed to the antenna modules 480 and 490 without passing through the filter. According to an embodiment, the control signal generated by the processor 120 may be transmitted to at least one switch (e.g., band selection switch and/or pass switch) designated to establish a signal path for satellite communication. An operation of configuring the signal path for satellite communication will be described later.

According to an embodiment, the drawings are only for helping understanding of the disclosure, but do not limit the embodiments of the disclosure. For example, although the processor 120 is shown in the drawings, the processor 120 may refer to an application processor (e.g., the application processor 410 of FIG. 4) or a communication processor (e.g., the communication processor 420 of FIG. 4).

According to an embodiment, upon transmission, the RFIC 440 may convert the baseband signal generated by the processor 120 into an RF signal (e.g., transmission signals Tx of Tx1, Tx2, Tx3, Tx4, and/or Tx5) corresponding to a designated frequency band. According to an embodiment, the converted RF signal may be a signal to be transmitted through the first antenna module 480 and/or the second antenna module 490, and may be input to the first communication circuit 450 and/or the second communication circuit 460. For example, upon transmission, the RFIC 440 may transmit the converted RF signals (e.g., Tx1 and Tx2) to the first communication circuit 450. For example, upon transmission, the RFIC 440 may transmit the converted RF signals (e.g., Tx3, Tx4, and Tx5) to the second communication circuit 460.

According to an embodiment, upon reception, the RFIC 440 may acquire the RF signal (e.g., a reception signal) received from the first antenna module 480 through the first communication circuit 450, and may convert the acquired RF signal into a baseband signal. According to an embodiment, upon reception, the RFIC 440 may acquire the RF signal (e.g., a reception signal) received from the second antenna module 490 through the second communication circuit 460, and may convert the acquired RF signal into a baseband signal. According to an embodiment, upon reception, the RFIC 440 may transmit the converted baseband signal to the processor 120.

According to an embodiment, the first communication circuit 450 may include amplifiers (e.g., drive amplifiers {DAs} 611 and 621 or power amplifiers {PAs} 612 and 622), switches (e.g., band selection switches 613, 623, and 633), filters 614, 615, 624, and 625, an antenna switch 640, and low noise amplifiers (LNAs) 631, 632. According to an embodiment, the first communication circuit 450 may transmit and receive RF signals through the first antenna module 480 (e.g., the first antenna 481 and/or the second antenna 482).

According to an embodiment, the first communication circuit 450 may include a transmission circuit (e.g., a Tx module) and a reception circuit (e.g., an Rx module). The transmission circuit may amplify transmission signals (e.g., Tx1 and Tx2) received from the RFIC 440 and may transmit the amplified transmission signals to the first antenna module 480 (e.g., the first antenna 481 and/or the second antenna 482). The reception circuit may amplify reception signals (e.g., Rx1 and Rx2) received from the first antenna module 480 (e.g., the first antenna 481 and/or the second antenna 482) and may transmit the amplified reception signals to the RFIC 440. According to an embodiment, the transmission circuit of the first communication circuit 450 may include a first transmission circuit and a second transmission circuit which support multiple frequency bands (e.g., high band and mid-band) and process RF signals in a designated band. For example, the first transmission circuit may amplify a first transmission signal Tx1 received from the RFIC 440 and may transmit the amplified first transmission signal to the first antenna module 480. For example, the second transmission circuit may amplify a second transmission signal Tx2 received from the RFIC 440 and may transmit the amplified transmission signal to the first antenna module 480.

According to an embodiment, the second transmission circuit may be configured to change a signal path of an RF signal at the time of transmission for satellite communication by the electronic device 101 under the control of the processor 120. According to an embodiment, the second transmission circuit may operate to support both cellular communication and satellite communication. According to an embodiment, upon transmission based on cellular communication, the second transmission circuit may transmit an RF signal to the first antenna module 480 through a first signal path. For example, upon transmission according to cellular communication, the second transmission circuit may amplify a second transmission signal Tx2 received from the RFIC 440 through the amplifiers 621 and 622, and may provide a signal path through which the amplified second transmission signal Tx2 is transmitted to the antenna switch 640 through a designated filter 624. For example, upon transmission according to satellite communication, the second transmission circuit may amplify the second transmission signal Tx2 received from the RFIC 440 through the amplifiers 621 and 622, and may provide a signal path through which the amplified second transmission signal Tx2 is bypassed and transmitted to the antenna switch 640 without passing through a designated filter 624.

According to an embodiment, the second transmission circuit supporting a band designated for satellite communication may include a switch 620 (e.g., pass switch) configured to establish a signal path for switching between satellite communication and cellular communication and a phase shifter 630 for converting a transmission signal into a phase for satellite communication. According to an embodiment, operations of the switch 620 and the phase shifter 630 according to an embodiment will be described later.

According to an embodiment, the second communication circuit 450 may include amplifiers (e.g., drive amplifiers {DAs} 641, 651, and 661 or power amplifiers {PAs} 642, 652, and 662), switches (e.g., band selection switches 653, 663, and 673), filters 643, 654, 655, 664 and 665, an antenna switch 690, and low noise amplifiers (LNAs) 631 and 632. According to an embodiment, the second communication circuit 460 may transmit and receive RF signals through the second antenna module 490 (e.g., a third antenna 491 and/or a fourth antenna 492).

According to an embodiment, the second communication circuit 460 may include a transmission circuit (e.g., Tx module) and a reception circuit (e.g., Rx module). The transmission circuit may amplify transmission signals (e.g., Tx3, Tx4, and Tx5) received from the RFIC 440 and may transmit the amplified transmission signals to the second antenna module 490 (e.g., a third antenna 491 and/or a fourth antenna 492). The reception circuit may amplify reception signals (e.g., Rx3 and Rx4) received from the second antenna module 490 (e.g., the third antenna 491 and/or the fourth antenna 492) and may transmit the amplified reception signals to the RFIC 440. According to an embodiment, the transmission circuit of the second communication circuit 460 may include a third transmission circuit, a fourth transmission circuit, and a fifth transmission circuit which support multiple frequency bands (e.g., 2G MB, high band, and mid-band) and process RF signals in a designated band. For example, the third transmission circuit may amplify the third transmission signal Tx3 received from the RFIC 440 and may transmit the amplified third transmission signal to the second antenna module 480. For example, the fourth transmission circuit may amplify the fourth transmission signal Tx4 received from the RFIC 440 and may transmit the amplified fourth transmission signal to the second antenna module 480. For example, the fifth transmission circuit may amplify the fifth transmission signal Tx5 received from the RFIC 440 and may transmit the amplified fifth transmission signal to the second antenna module 490.

According to an embodiment, the third transmission circuit and the fifth transmission circuit may be configured to change a signal path of an RF signal under the control of the processor 120 upon transmission for satellite communication by the electronic device 101. According to an embodiment, the third transmission circuit and the fifth transmission circuit may operate to support both cellular communication and satellite communication. According to an embodiment, upon transmission based on cellular communication, the third transmission circuit may transmit the RF signal to the first antenna module 490 through the first signal path. For example, upon transmission according to cellular communication, the third transmission circuit may amplify the third transmission signal Tx3 received from the RFIC 440 through the amplifiers 641 and 642 and may provide a signal path through which the amplified third transmission signal Tx3 is transmitted to the antenna switch 690 through a designated filter 643. For example, upon transmission according to satellite communication, the third transmission circuit may amplify the third transmission signal Tx3 received from the RFIC 440 through the amplifiers 641 and 642, and may provide a signal path through which the amplified third transmission signal Tx3 is bypassed and transmitted to the antenna switch 690 without passing through the designated filter 643. For example, upon transmission according to cellular communication, the fifth transmission circuit may amplify the fifth transmission signal Tx5 received from the RFIC 440 through the amplifiers 661 and 662, and may provide a signal path through which the amplified fifth transmission signal Tx5 is transmitted to the antenna switch 690 through a designated filter 664. For example, upon transmission according to satellite communication, the fifth transmission circuit may amplify the fifth transmission signal Tx5 received from the RFIC 440 through the amplifiers 661 and 662, and may provide a signal path through which the amplified fifth transmission signal Tx5 is bypassed and transmitted to the antenna switch 690 without passing through the designated filter 664.

According to an embodiment, the third communication circuit supporting a band designated for satellite communication may include a switch 650 (e.g., a path switch) configured to establish a signal path for switching between satellite communication and cellular communication, and a phase shifter 660 for converting a transmission signal to a phase for satellite communication. According to an embodiment, the fifth communication circuit supporting a band designated for satellite communication may include a switch 670 (e.g., pass switch) configured to establish a signal path for switching satellite communication and cellular communication and a phase shifter 680 for converting a transmission signal into a phase for satellite communication. Operations of the switches 650 and 670 and the phase shifters 660 and 680 according to an embodiment will be described later.

According to an embodiment, the switches (e.g., pass switches) 620, 650, and 670 may switch the signal path for switching between satellite communication and cellular communication. According to an embodiment, the switches (e.g., pass switches) 620, 650, and 670 may be switched according to a control signal (e.g., a first control signal or a second control signal) of the processor 120.

According to an embodiment, the phase shifters 630, 660, and 680 may serve to adjust the phase of the transmission power of each signal path.

According to an embodiment, each component of the first communication circuit 450 and the second communication circuit 460 may be a circuit element having the same or similar role. The operation of the circuit element according to an exemplary embodiment will be schematically described.

According to an embodiment, the drive amplifiers (DAs) 611, 621, 641, 651, and 661 may perform a function of providing input power for the power amplifiers (PAs) 612, 622, 642, 652, and 662 to perform amplification with sufficient power (e.g., maximum power).

According to an embodiment, the PAs 612, 622, 642, 652, and 662 may amplify RF signals to be transmitted through the antenna modules 480 and 490. For example, the PAs 612, 622, 642, 652, and 662 may perform a function of amplifying power so that each transmission circuit can output an RF signal having sufficient power.

According to an embodiment, some filters 614, 624, 654, and 664 of the first filters 614, 624, 643, 654, and 664 and the second filters 615, 625, 655, and 665 may be classified according to the transmission path and the reception path of the signal. For example, the first filters 614, 624, 643, 654, and 664 may indicate a BPF for allowing a designated frequency in a transmission terminal to pass therethrough, and the second filters 615, 625, 655, and 665 may indicate a BPF for allowing a designated frequency in a reception terminal to pass therethrough. According to an embodiment, the first filters 614, 624, 643, 654, and 664 and the second filters 615, 625, 655, and 665 may form pairs according to the transmission path and the reception path, and may be appropriately matched with an antenna stage (e.g., the antenna switches 640 and 690) in therebetween. For example, the first filters 614, 624, 643, 654, and 664 and the second filters 615, 625, 655, and 665 may have a duplexer structure where the transmission and reception paths are branched and connected to the antenna switch (e.g., the antenna switch 640 and 690) according to the transmission/reception of the signal. For example, the filters 614 and 615 may be arranged as first duplexers, the filters 624 and 625 may be arranged as second duplexers, the filters 654 and 655 may be arranged as third duplexers, and the filters 664 and 665 may be arranged as fourth duplexers, respectively, and may serve to branch the transmission terminal and the reception terminal, respectively.

According to an embodiment, the first switches (e.g., the band selection switches) 613, 623, 653, and 663 in the transmission path may be switched in such a manner that the RF signals amplified through the PAs 612, 622, 642, 652, and 662 can be input to the first filters 614, 624, 643, 654, and 664 corresponding to the transmission path. According to an embodiment, the first switches 613, 623, 653, and 663 may be switched according to the control of the processor 120. According to an embodiment, the second switches (e.g., band selection switches) 633 and 673 in the reception path may be switched in such a manner that the RF signals received from the corresponding second filters 615, 625, 655, and 665 in the reception path can be input to the corresponding LNAs 631, 632, 671, and 672 in the reception path. According to an embodiment, the second switches 633 and 673 may be switched according to the control of the processor 120.

According to an embodiment, the first filters 614, 624, 643, 653, and 664 in the transmission path may allow the transmission signal corresponding to a designated frequency band among the input transmission signals to pass therethrough. For example, the first filters 614, 624, 643, 653, and 664 may be band pass filters that allow the transmission signal corresponding to a designated frequency band to pass therethrough. The transmission signal having passed through the first filters 614, 624, 643, 653, and 664 may be transmitted to the antenna modules 480 and 490 (e.g., at least one antenna) connected by the antenna switches 640 and 690.

According to an embodiment, the second filters 615, 625, 655, and 665 in the reception path may transmit reception signals acquired from the antenna modules 480 and 490 to the corresponding LNAs 631, 632, 671, and 672. For example, the second filters 615, 625, 655, and 665 may be band pass filters that allow the reception signal corresponding to a designated frequency band to pass therethrough. The reception signals having passed through the second filters 615, 625, 655, and 665 may be input to the LNAs 631, 632, 671, and 672.

According to an embodiment, the antenna switches 640 and 690 may transmit the transmission signals having passed through the first filters 614, 624, 643, 653, and 664 to the corresponding antenna modules 480 and 490 (e.g., at least one antenna), or may transmit the reception signals acquired from the antenna modules 480 and 490 to the corresponding LNAs 631, 632, 671 and 672 through the second filters 615, 625, 655 and 665.

According to an embodiment, in an EN-DC situation in which a plurality of transmission signals are output simultaneously, the antenna switches 640 and 690 may simultaneously receive a plurality of transmission signals having passed through the filter of the corresponding signal path. According to an embodiment, the antenna switches 640 and 690 may be switched in such a manner that a plurality of transmission signals can be respectively transmitted to a designated antenna.

According to an embodiment, the antenna switches 640 and 690 may be switched in such a manner that the reception signals received through the antenna modules 480 and 490 can be transmitted to the corresponding second filters 615, 625, 655 and 665. The reception signals having passed through the second filters 615, 625, 655, and 665 may be input to the LNAs 631, 632, 671, and 672.

According to an embodiment, the antenna switches 640 and 690 may be multiplexers. In an embodiment, the multiplexer may transmit the transmission signals input from the PAs 612, 622, 642, 652, and 662 to the corresponding antenna modules 480 and 490, or may transmit the reception signals acquired from the antenna modules 480 and 490 to the LNAs 631, 632, 671, and 672. According to an embodiment, the multiplexer may include duplexers (e.g., a first filter and a second filter).

According to an embodiment, the LNAs 631, 632, 671, and 672 may amplify the reception signal and may output the amplified signal to the RFIC 440.

According to an embodiment of the disclosure, as illustrated in FIG. 6, a transmission structure capable of supporting satellite communication while maximizing the structure of an existing communication circuit (e.g., RFFE) may be provided. According to an embodiment of the disclosure, the signal path of the transmission circuit may be configured to be switched to support satellite communication. For example, in the drawing, a mid-band may be assumed as a frequency band that can be used for satellite communication, and the PAs 622, 642, and 662 of the transmission circuits (e.g., the second transmission circuit, the third transmission circuit, and the fifth transmission circuit) which operate in the mid-band may be assumed to be used as amplifiers that output RF signals at maximum power for satellite communication.

For example, the transmission signal for satellite communication is required to reach the satellite. According to an embodiment of the disclosure, the transmission signal may be output with the maximum output of the PA so that the transmission signal can reach the satellite. For example, the same transmission signal may be amplified by a plurality of PAs, and the amplified transmission signal may be bypassed to the antenna module while omitting the filter stage to secure the transmission power.

According to an embodiment, in the drawing, the PAs 622, 642, and 662 in a total of three transmission circuits supporting a mid-band may be included in the PA used for satellite communication. According to an embodiment, the electronic device 101 may transmit a plurality of identical RF signals at the same time for satellite communication, and may adjust the phases of the plurality of identical RF signals to transmit the RF signals to the antenna module, thereby outputting additional high transmission power.

According to an embodiment, at the output terminals of the PAs 622, 642, and 662 supporting the frequency band (e.g., mid-band) used for satellite communication with the satellite, the electronic device 101 may include switches (e.g., pass switches) 620, 650, and 670 capable of changing a signal path in addition to switches (e.g., band selection switches) 613 and 623, and phase shifters 630, 660 and 680 capable of converting the phase of the transmission signal. For example, the electronic device 101 may perform switching to the signal path that does not pass through the first filters 614, 624, 643, 654, and 664 when supporting satellite communication, and may perform switching to the signal path that passes through the first filters 614, 624, 643, 654, and 664 when supporting cellular communication.

According to an embodiment, referring to the example of FIG. 6, during satellite communication, in the drawing, the electronic device 101 may configure signal paths in which all the switches (e.g., pass switches) 620, 650, and 670 positioned at the output terminals of the three PAs 622, 642, and 662 of the transmission circuits (e.g., the second transmission circuit, the third transmission circuit, and the fifth transmission circuit) do not pass through the first filters 614, 624, 643, 654, and 664. According to an embodiment, referring to the example of FIG. 6, during cellular communication, in the drawing, the electronic device 101 may establish signal paths in which all the switches (e.g., pass switches) 620, 650, and 670 positioned in at the output terminals of the three PAs 622, 642, and 662 of the transmission circuits (e.g., the second transmission circuit, the third transmission circuit, and the fifth transmission circuit) pass through the first filters 614, 624, 643, 654, and 664.

According to an embodiment, the signal path of the second transmission circuit may be configured such that the transmission signal amplified through the PA 622 is bypassed to the first antenna module 480 (e.g., the first antenna 481) through the switch 620. According to an embodiment, the signal path of the third transmission circuit may be configured such that the transmission signal amplified by the power amplifier 642 is bypassed to the second antenna module 490 (e.g., the third antenna 491) through the switch 650. According to an embodiment, the signal path of the fifth transmission circuit may be configured such that the transmission signal amplified by the power amplifier 662 is bypassed to the second antenna module 490 (e.g., the fourth antenna 492) through the switch 670. According to an embodiment, the phase shifters 630, 660, and 680 of the respective signal paths may adjust the phase of transmission power of each signal path.

According to an embodiment, the first antenna 481 or the second antenna 482 may be used based on the communication performance of the antenna used for satellite communication in the first transmission circuit.

According to an embodiment, the third antenna 491 and the fourth antenna 492 may be used as the antennas used for satellite communication in the second transmission circuit, respectively, or one of the third antenna 491 and the fourth antenna 492 may be used. For example, the antenna switch 690 may simultaneously receive the RF signal of the third transmission circuit and the RF signal of the fifth transmission circuit, and may transmit the received RF signals to the third antenna 491 and the fourth antenna 492, respectively. For example, the antenna switch 690 may simultaneously receive the RF signal of the third transmission signal and the RF signal of the fifth transmission signal, may combine the received RF signals, and may transmit the combined signals to the third antenna 491 or the fourth antenna 492 selected based on communication performance.

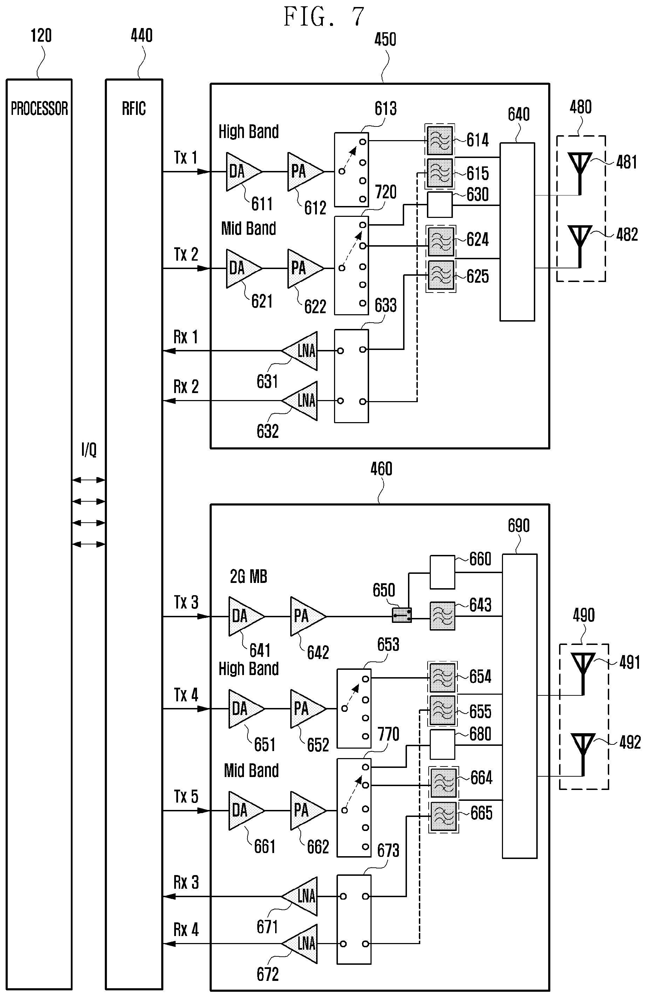

FIG. 7 is a diagram schematically illustrating a circuit configuration of a communication circuit related to communication of an electronic device according to an embodiment of the disclosure.

According to an embodiment, the configuration and operation illustrated in FIG. 7 may correspond to those described with reference to FIG. 6. In the following description of FIG. 7, contents overlapping those described with reference to FIG. 6 may be omitted or briefly described.

According to an embodiment, FIG. 7 illustrates an example of a design structure in which the additional switches (e.g., pass switches) 620, 650, and 670 for switching the signal path of the transmission circuit to support satellite communication are omitted and the existing switch (e.g., band selection switch) 770 is used.

According to an embodiment, in order to change the signal path of the mid-band (e.g., the fifth transmission circuit), the electronic device 101 may establish an additional transmission path by using a port (e.g., GPIO) that is not used in the existing switch (e.g., band selection switch) 770 without using the switches (e.g., pass switches) 620, 650, and 670 for switching the signal path as illustrated in FIG. 6. In the drawing, since the third transmission circuit does not include a separate band selection switch, the third transmission circuit may include the switch 650 for switching the signal path.

According to an embodiment, in the transmission control structure as shown in FIG. 7, the structure and operation related to switching configuration and antenna matching for each signal path during satellite communication may correspond to those described with reference to FIG. 6.

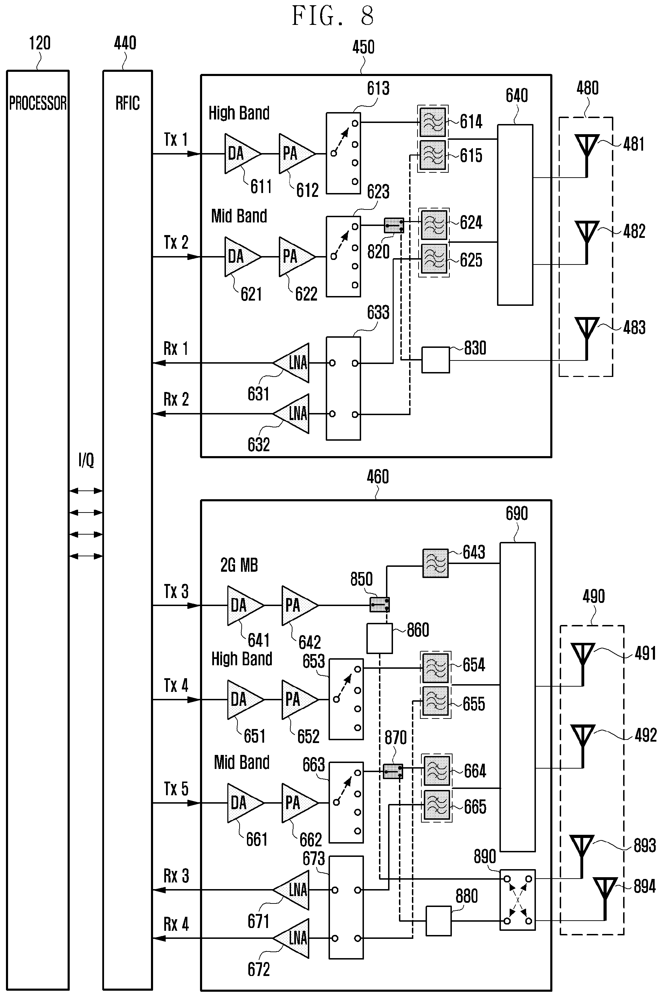

FIG. 8 is a diagram schematically illustrating a circuit configuration of a communication circuit related to communication of an electronic device according to an embodiment of the disclosure.

According to an embodiment, the configuration and operation illustrated in FIG. 8 may correspond to those described with reference to FIG. 6. In the following description of FIG. 8, contents overlapping those described with reference to FIG. 6 may be omitted or briefly described.

According to an embodiment, in order to support satellite communication, FIG. 8 may illustrate an example of a structure in which satellite antennas 883, 893, and 894 for satellite communication are used in addition to the transmission control structure of the transmission circuit as illustrated in FIG. 6. For example, the electronic device 101 may include a first satellite antenna 883 operatively connected to the first communication circuit 450, a second satellite antenna 893 operatively connected to the second communication circuit 460, and a third satellite antenna 894 operatively connected to the second communication circuit 460.

According to an embodiment, when transmitting an RF signal according to satellite communication, the first communication circuit 450 may include a switch (e.g., pass switch) 820 for establishing a path to the first satellite antenna 883 and a phase shifter 830 for adjusting the phase of transmission power of the signal path, in the corresponding transmission circuit (e.g., the second transmission circuit).

According to an embodiment, when transmitting an RF signal according to satellite communication, the second communication circuit 460 may include switches 850 and 870 for path configuration with the second satellite antenna 893 and/or the third satellite antenna 894, and phase shifters 860 and 880 for adjusting the phase of the transmission power of each signal path, in the corresponding transmission circuit (e.g., the third transmission circuit and the fifth transmission circuit).

According to an embodiment, in the transmission control structure as shown in the example of FIG. 8, the structure and operation related to switching configuration and antenna matching for each signal path during satellite communication may correspond to those described with reference to FIG. 6 above.

A communication circuit of the electronic device 101 according to an embodiment of the disclosure may include a plurality of antennas, an antenna switch configured to match an RF signal of a designated frequency band with at least one antenna, and a transmission circuit configured to process a radio frequency (RF) signal in a designated frequency band. According to an embodiment, the transmission circuit may include a first transmission circuit including a first amplifier configured to amplify the RF signal in the designated frequency band, a first filter configured to allow the RF signal in the designated frequency band to pass therethrough, and a first antenna switch configured to selectively switch a first signal path through which the RF signal is transmitted to the antenna switch while passing through the first filter and a second signal path through which the RF signal is transmitted to the antenna switch without passing through the first filter. According to an embodiment, the transmission circuit may include a second transmission circuit including a second amplifier configured to amplify the RF signal in the designated frequency band, a second filter configured to allow the RF signal in the designated frequency band to pass therethrough, and a second switch configured to selectively switch a third signal path through which the RF signal is transmitted to the antenna switch while passing through the second filter, and a fourth signal path through which the RF signal is transmitted to the antenna switch without passing through the second filter.

According to an embodiment, the transmission circuit may control operations of the first switch and the second switch to be connected to the second signal path and the fourth signal path during satellite communication, may amplify the plurality of identical RF signals in the designated frequency band through the first amplifier and the second amplifier, may allow a first signal amplified by the first amplifier to be bypassed to the antenna switch through the second signal path without passing through the first filter, may allow a second signal amplified by the second amplifier to be bypassed to the antenna switch through the fourth signal path without passing through the second filter, and may output the first signal and the second signal together through the plurality of antennas via the antenna switch.

According to an embodiment, the designated frequency band may include a frequency band used for cellular communication and satellite communication.

According to an embodiment, the communication circuit may operate, based on a control signal generated by the processor of the electronic device, to selectively switch a signal path through which the RF signal is transmitted to the antenna switch while passing through the filter and a signal path through which the RF signal is transmitted to the antenna switch without passing through the filter.

According to an embodiment, the communication circuit may operate to switch, based on a first control signal generated by the processor, the first switch and the second switch to establish a first signal path and a third signal path for cellular communication. According to an embodiment, the communication circuit may operate to switch, based on a second control signal generated by the processor, the first switch and the second switch to establish a second signal path and a fourth signal path for satellite communication.

According to an embodiment, the first transmission circuit may include the first amplifier configured to amplify the RF signal, the first switch configured to be arranged in an output terminal of the first amplifier and to selectively switch the signal path of the RF signal to the first signal path or the second signal path, the first filter configured to be arranged on the first signal path established by the first switch and to allow the RF signal to pass therethrough, and a first phase shifter configured to be arranged on the second signal path established by the first switch.

According to an embodiment, the second transmission circuit may include the second amplifier configured to amplify the RF signal, the second switch configured to be arranged in an output terminal of the second amplifier and to selectively switch the signal path of the RF signal to the third signal path or the fourth signal path, the second filter configured to be arranged on the third signal path established by the second switch and to allow the RF signal to pass therethrough, and a second phase shifter configured to be arranged on the fourth signal path established by the second switch.

According to an embodiment, when the RF signal of the second signal path and the RF signal of the fourth signal path are transmitted to the antenna switch, the first phase shifter and the second phase shifter may serve to change phases so that a plurality of identical RF signals are combined to output high transmission power.

According to an embodiment, the transmission circuit may control, during cellular communication, operations of the first switch and the second switch to be connected to the first signal path and the third signal path so that the RF signal in the designated frequency is transmitted to the antenna switch while passing through a designated filter.

According to an embodiment, the first signal path and the third signal path may include signal paths through which the RF signal amplified by the amplifier passes through the designated filter and then is transmitted to the antenna switch so that the RF signal in the designated frequency band is transmitted with designated power according to cellular communication.

According to an embodiment, the second signal path and the fourth signal path may include signal paths through which the RF signal amplified by the amplifier is bypassed and transmitted to the antenna switch without passing through the filter so that the RF signal in the designated frequency band is transmitted with maximum power according to satellite communication.

According to an embodiment, the antenna switch may be configured to match the RF signals input from the first transmission circuit and the second transmission circuit with at least one corresponding antenna.

An electronic device 101 according to an embodiment may include a first antenna module configured to transmit a first transmission signal, a second antenna module configured to transmit a second transmission signal, a communication circuit configured to be operatively connected to the first antenna module and the second antenna module and to include a first transmission circuit configured to signal-process the first transmission signal according to a designated frequency band and a second transmission circuit configured to signal-process the second transmission signal according to a designated frequency band, and a processor configured to be operatively connected to the communication circuit.

According to an embodiment, the processor may operate to identify a type of communication based on detecting a start of a communication service, determine a signal path for RF signal transmission to be a first signal path for cellular communication based on determining that the type of communication is cellular communication, generate a first control signal for establishing the first signal path, determine the signal path for RF signal transmission to be a second signal path for satellite communication based on determining that the type of communication is satellite communication, and generate a second control signal for establishing the second signal path.

According to an embodiment, the processor may operate, during cellular communication, to generate the first control signal for controlling switching such that the RF signal passes through the filter and is transmitted to the antenna module.

According to an embodiment, the processor may operate to generate, during satellite communication, the second control signal for controlling switching such that the RF signal is bypassed to the antenna module without passing through the filter.

According to an embodiment, the first control signal and the second control signal may be respectively transmitted to designated switches to establish the signal path for satellite communication.

According to an embodiment, the designated frequency band may include a frequency band used for the cellular communication and the satellite communication.

Hereinafter, an operating method of the electronic device 101 according to various embodiments will be described in detail. Operations performed by the electronic device 101 according to various embodiments may be performed by the processor 120 including various processing circuitry and/or executable program elements of the electronic device 101. According to an embodiment, operations performed by the electronic device 101 may be executed by instructions that are stored in the memory 130 and cause the processor 120 to operate when executed.

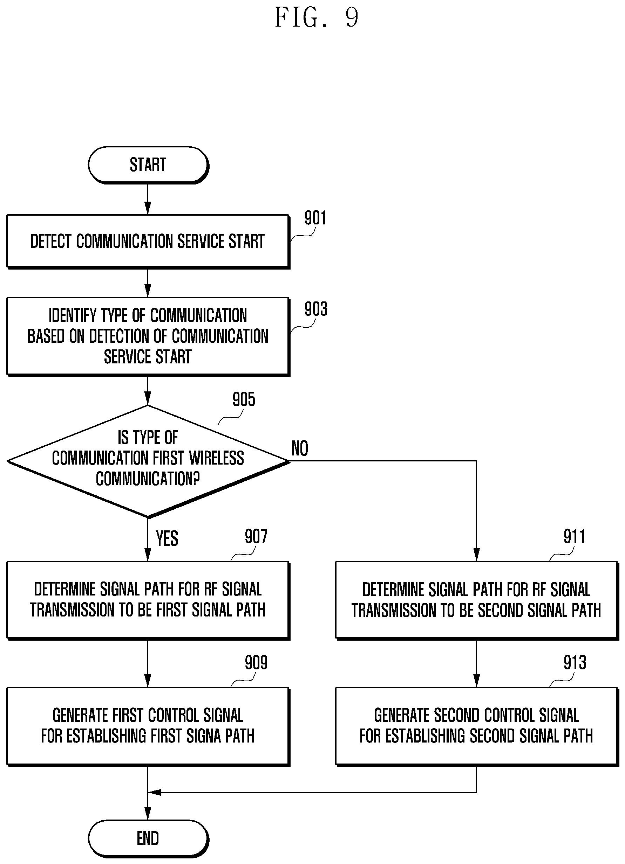

FIG. 9 is a flowchart illustrating an operating method of an electronic device according to an embodiment of the disclosure.

According to an embodiment, FIG. 9 may illustrate an example of supporting switching of a transmission signal path for RF signal transmission of a communication circuit based on a type of communication (e.g., first wireless communication and second wireless communication) in the electronic device 101 according to an embodiment. For example, FIG. 9 may illustrate an example in which the electronic device 101 may switch a signal path for satellite communication according to first wireless communication (e.g., cellular communication) or second wireless communication (e.g., satellite communication) during communication.

A method for the electronic device according to an embodiment of the disclosure to support satellite communication may be performed according to, for example, a flowchart illustrated in FIG. 9. The flowchart illustrated in FIG. 9 is only a flowchart according to an embodiment for supporting satellite communication by the electronic device 101, and the order of at least some operations may be changed, and the at least some operations may be performed in parallel and performed as independent operations. Alternatively, at least some other operations may be performed complementary to at least some operations. According to an embodiment of the disclosure, operations 901 to 913 may be performed by at least one processor 120 (e.g., the application processor 410 and/or the communication processor 420 of FIG. 4) of the electronic device 101.

According to an embodiment, the operations described in FIG. 9 may be heuristically performed by being combined with, for example, the operations described in FIGS. 1 to 8, or may be heuristically performed as detailed operations of at least some operations of the described operations.

As illustrated in FIG. 9, an operating method (e.g., an operating method for supporting satellite communication) performed by the electronic device 101 according to an embodiment may include detecting 901 a start of a communication service, identifying 903 a type of communication based on the detecting the start of the communication service, determining 905 whether the type of communication is first wireless communication (e.g., cellular communication) or second wireless communication (e.g., satellite communication), determining 907 a signal path for transmitting an RF signal to be a first signal path for the first wireless communication based on the determining that the type of communication is the first wireless communication, generating 909 a first control signal for establishing the first signal path, determining 911 the signal path for transmitting the RF signal to be a second signal path for the second wireless communication based on the determining that the type of communication is the second wireless communication, and generating 913 a second control signal for establishing the second signal path.

Referring to FIG. 9, in operation 901, the processor 120 of the electronic device 101 may detect a start of a communication service. According to an embodiment, the processor 120 may detect a trigger related to initiating the communication service (e.g., a cellular communication-based service or an artificial communication-based service) based on a connection with an external electronic device. For example, the processor 120 may detect reception of the RF signal from the outside (e.g., a base station or a satellite) or may detect a communication start based on receiving a user input requesting communication from the outside (e.g., a base station or a satellite).

In operation 903, the processor 120 may identify a type of communication based on detecting a communication service start. In an embodiment, the type of communication may include a first wireless communication of a cellular communication method performing communication with a base station and a second wireless communication of a satellite communication method performing communication with a satellite. According to an embodiment, the processor 120 may determine whether the communication service to be performed is the first wireless communication (e.g., cellular communication) method in which communication is performed with the base station, or the second wireless communication (e.g., satellite communication) in which communication is performed with the satellite.

In operation 905, the processor 120 may determine whether the type of communication is the first wireless communication (e.g., cellular communication) or the second wireless communication (e.g., satellite communication) based on the result obtained by identifying the type of communication.

When it is determined that the type of communication is the first wireless communication in operation 905 (e.g., "YES" of operation 905), in operation 907, the processor 120 may determine a signal path for transmitting the RF signal (e.g., transmission signal) to be a first signal path for the first wireless communication. According to an embodiment, based on the determining that the type of communication is the first wireless communication, the processor 120 may determine a signal path of a transmission circuit (or a transmission terminal) for processing the RF signal in a communication circuit (e.g., RFFE) to be the first signal path. According to an embodiment, the first signal path may include a signal path through which the RF signal amplified by an amplifier passes through a designated filter and then is transmitted to an antenna module so that the RF signal in a designated frequency band is transmitted with designated power according to the first wireless communication (e.g., cellular communication).

In operation 909, the processor 120 may generate a first control signal for establishing the first signal path. According to an embodiment, the processor 120 may transmit the first control signal to the communication circuit (e.g., at least one designated switch of the transmission circuit) so that the transmission circuit for processing the RF signal in the communication circuit may establish (or switch) the first signal path.

When it is determined that the type of communication is the second wireless communication in operation 905 (e.g., "NO" of operation 905), in operation 911, the processor 120 may determine the signal path for transmitting the RF signal (e.g., a transmission signal) to be the second signal path for the second wireless communication. According to an embodiment, based on the determining that the type of communication is the second wireless communication, the processor 120 may determine the signal path of the transmission circuit (or a transmission terminal) for processing the RF signal in the communication circuit (e.g., RFFE) to be the second signal path. In an embodiment, the second signal path may include a signal path through which the RF signal amplified by the amplifier is bypassed and transmitted to the antenna module without passing through the filter so that the RF signal in the designated frequency band is transmitted with maximum power according to the second wireless communication (e.g., satellite communication).

**In** operation 913, the processor 120 may generate a second control signal for establishing the second signal path. According to an embodiment, the processor 120 may transmit the second control signal to the communication circuit (e.g., at least one designated switch of the transmission circuit) so that the transmission circuit for processing the RF signal in the communication circuit may establish (or switch) the second signal path.

An operating method performed by the electronic device 101 according to an embodiment of the disclosure may include identifying the type of communication based on detecting a start of a communication service, determining a signal path for RF signal transmission to be a first signal path for cellular communication based on determining that the type of communication is cellular communication, generating a first control signal for establishing the first signal path, determining the signal path for RF signal transmission to be a second signal path for satellite communication based on determining that the type of communication is satellite communication, and generating a second control signal for establishing the second signal path.

According to an embodiment, the generating of the first control signal may include generating the first control signal for controlling switching so that the RF signal passes through the filter and is transmitted to an antenna module during cellular communication.

According to an embodiment, the generating of the second control signal may include generating the second control signal for controlling switching so that the RF signal is bypassed to the antenna module without passing through the filter during satellite communication.

According to an embodiment, the designated frequency band may include a frequency band used for the cellular communication and the satellite communication.

The various embodiments of the disclosure disclosed in the present specification and drawings are only presented as specific examples to easily explain the technical content of the disclosure and help understanding of the disclosure, and are not intended to limit the scope of the disclosure. Therefore, the scope of the disclosure should be construed as including all changes or modified forms derived based on the technical spirit of the disclosure in addition to the embodiments disclosed herein.

## Claims

1. A communication circuit of an electronic device, the communication circuit comprising:
a plurality of antennas;
an antenna switch configured to match a radio frequency (RF) signal of a designated frequency band with at least one antenna of the plurality of antennas;
a first amplifier configured to amplify the RF signal in the designated frequency band, thereby resulting in a first amplified signal;
a first antenna switch connected to the first amplifier;
a first filter configured to allow the first amplified signal in the designated frequency band, the first filter connected to the antenna switch,
wherein the first antenna switch is configured to selectively form a first signal path to the antenna switch via the first filter or a second signal path to the antenna switch bypassing the first filter;
a second amplifier configured to amplify the RF signal in the designated frequency band, thereby resulting in a second amplified signal;
a second antenna switch connected to the second amplifier;
a second filter configured to allow the second amplified signal in the designated frequency band, the second filter connected to the antenna switch,
wherein the second antenna switch is configured to selectively form a third signal path to the antenna switch via the second filter or a fourth signal path to the antenna switch bypassing the first filter; and
a processor configured to control the first antenna switch to form the second signal path and the second antenna switch to form the fourth signal path during communication with a satellite.

2. The communication circuit of claim 1, wherein the designated frequency band comprises a frequency band used for communication with a cellular network and communication with the satellite.

3. The communication circuit of claim 1, wherein the processor is configured to control the first antenna switch and the second antenna switch based on control signals.

4. The communication circuit of claim 1, wherein the processor is configured to:
cause the first antenna switch to form the first signal path and cause the second antenna switch to form the third signal path during communication with a cellular network based a first control signal; and
cause the first antenna switch to form the second signal path and cause the second antenna switch form the fourth signal path during communication with a satellite based a second control signal.

5. The communication circuit of claim 1, further comprising a first phase shifter disposed on the second signal path.

6. The communication circuit of claim 5, further comprising
a second phase shifter disposed on the fourth signal path.

7. The communication circuit of claim 6, wherein the first phase shifter and the second phase shifter are configured to, when the second signal path and the fourth signal path are formed, change phases of the first amplified signal and second amplified signal, thereby resulting in substantially identical RF signals, and wherein the antenna switch combines the substantially identical RF signals.

8. The communication circuit of claim 1, wherein the processor is configured to control the first antenna switch to form the first signal path and the second antenna switch to form the third signal path during communication with a cellular network.

9. The communication circuit of claim 1, wherein the antenna switch is configured to match the first amplified signal and the second amplified signal with at least one corresponding antenna of the plurality of antennas.

10. An electronic device comprising:
a first antenna module configured to transmit a first transmission signal;
a second antenna module configured to transmit a second transmission signal;
a communication circuit connected to the first antenna module and the second antenna module, the communication circuit configured to perform signal processing, thereby providing the first transmission signal and the second transmission signal; and
a processor connected to the communication circuit, wherein the processor is configured to:
identify a type of communication based on detecting a start of a communication service;
when the type of communication is cellular communication, generate a first control signal establishing a first signal path through the communication circuit for RF signal transmission; and
when the type of communication is satellite communication, generate a second control signal establishing a second signal path through the communication circuit for RF signal transmission.

11. The electronic device of claim 10,
wherein the first signal path passes through a filter, and
wherein the second signal path bypasses the filter.

12. The electronic device of claim 10, wherein the communication circuit comprises designated switches configured to form the first signal path and the second signal path, and wherein the processor transmits the first control signal and the second control signal to the designated switches, and wherein the first transmission signal and the second transmission signal has a frequency in a frequency band used for the cellular communication and the satellite communication.

13. An operating method of an electronic device, comprising:
identifying a type of communication based on detecting a start of a communication service;
when the type of communication is cellular communication, generating a first control signal establishing a first signal path through a communication circuit for Radio Frequency (RF) signal transmission; and
when the type of communication is satellite communication, generate a second control signal for establishing a second signal path through the communication circuit for RF signal transmission.

14. The operating method of claim 13, wherein the first signal path passes through a filter.

15. The operating method of claim 13, wherein the second signal path bypasses the filter.
